# EUROPEAN PATENT APPLICATION

(11) **EP 1 351 140 A1**
(43) Date of publication of application: **08.10.2003**
(21) Application number: 02354048.7
(22) Date of filing: 20.03.2002
(51) Int. Cl.: G06F 9/46, H04L 12/18

(54) **A method and apparatus for multicasting messages using a message-passing interface**

(71) Applicant: Hewlett-Packard Company, Palo Alto, CA 94304 (US)
(72) Inventor: Bruno, Richard, 38920 Crolles (FR)
(74) Representative: Lloyd, Richard Graham

(57) **Abstract**

An apparatus and method for using IP multicast to deliver message passing middleware messages between a plurality of processors (102) involved in parallel computing. In accordance with the invention a communicator (204) is created in the message-passing-middleware which is used to transmit a message from a predetermined processor to at least one other processor, such that the message includes a envelope and message body, and allocating a predetermined multicast address to the communicator (206), such that the message includes the multicast address.

## Description

### FIELD OF THE INVENTION

This invention relates generally to parallel computing, and more particularly to using IP multicast and message-passing paradigms in parallel computing systems.

### BACKGROUND OF THE INVENTION

Parallel processing grew out of the programmer's need to solve ever larger, more memory intensive problems and simply to solve problems with a greater speed than is possible on a sequential computer. Using parallel processing programming methods on parallel computers gave programmers access to greater memory and Central Processing Unit (CPU) resources not available on sequential computers.

Historically, there have been two approaches to writing parallel processing programs. They are (i) the use of a directive-based data-parallel language and (ii) explicit message passing via library calls from standard programming languages. In a directive-based data-parallel language such as High Performance Fortran (HPF) or OpenMP, a sequential code is made parallel by adding directives (which appear as comments in the sequential code) that direct the compiler how to distribute data and work across the processors. The details of data distribution, computation, and communications are left to the compiler. Data parallel languages are usually implemented on shared memory architectures because the global memory space greatly simplifies the writing of compilers. In a message passing approach, it is left up to the programmer to explicitly divide data and work across the processors, as well as to manage the communications between them.

Message Passing Interface or MPI is a well known message passing paradigm. MPI is a library of functions (in a format such as C/C++) or subroutines (in a format such as Fortran) that allow the programmer to insert commands into the source code to perform data communications between processors. When a processor performs a broadcast, a message is sent from the sending processor to several other processors, MPI quickly delivers the message to all the recipients.

Previous methods of delivering MPI messages are based on spanning tree technologies, which distribute messages between processors in a unicast mode, which requires one individual message being sent for each recipient. There is a need for a technology that allows messages to be transmitted in a scalable manner and that does not require adjusting the hardware or source code.

### SUMMARY OF THE INVENTION

In one respect, the invention is a method for transmitting messages between a plurality of processors. The method comprising the steps of creating a communicator in message-passing-middleware which is used to transmit a message from a predetermined processor to at least one other processor, such that the message includes a envelope and message body, and allocating a predetermined IP address to the communicator, such that the message includes the IP address.

The method includes linking message-passing-middleware software to predetermined application software in at least one processor.

The method, further comprises the step of transmitting a message passing broadcast from the processor generating the communicator to a plurality of processors. The message is sent to the predetermined processors via a TCP/IP network, and received via the TCP/IP network.

In the method, the predetermined IP address values range from 224.0.0.0 to 239.255.255.255. Also, the message-passing-middleware is message passing interface (MPI).

In another respect, the invention is a method for transmitting messages between a plurality of processors, the method comprising the steps of: linking message-passing-middleware software to a predetermined application software in at least one processor, creating a communicator in the message-passing-middleware which is used to transmit a message from a predetermined processor to at least one other processor, such that the message includes a envelope and message body, allocating a predetermined IP address to the communicator, such that the message is adjusted to include the IP address, transmitting a message passing broadcast from the processor generating the communicator to a plurality of processors, sending the message to the predetermined processors via a TCP/IP network, and receiving the message via the TCP/IP network.

In yet another respect, the invention is an apparatus for transmitting messages between a plurality of processors, the apparatus comprises: a plurality of processors, a network connecting the plurality of processors, and message-passing software running on each of the plurality of processors, wherein the processors generate a communicator which is used transmit messages between the plurality of processors, such that the communicator is assigned a predetermined IP address and transmitted over TCP/IP.

In comparison to known prior art, certain embodiments of the invention are capable of achieving certain aspects, including some or all of the following: (1) no application software modification required; (2) takes advantage of existing infrastructure; and (3) no requirement to buy expensive network solutions. Those skilled in the art will appreciate these and other advantages and benefits of various embodiments of the invention upon reading the following detailed description of a preferred embodiment with reference to the below-listed drawings.

### BRIEF DESCRIPTION OF THE DRAWINGS

A more complete understanding of the invention and its advantages will be apparent from the following detailed description taken in conjunction with the accompanying drawings, wherein examples of the invention are shown and wherein:
Figure 1 is a block diagram of a distributed memory multiprocessor system, according to an embodiment of the invention; and
Figure 2 is a flow chart of a method of incorporating IP multicast with the message-passing middleware, according to an embodiment of the invention.

### DETAILED DESCRIPTION OF A PREFERRED EMBODIMENT

In the following detailed description, numerous specific details are set forth in order to provide a thorough understanding of the present invention. However, it will be apparent to one of ordinary skill in the art that these specific details need not be used to practice the present invention. In other instances, well known structures, interfaces, and processes have not been shown in detail in order not to unnecessarily obscure the present invention.

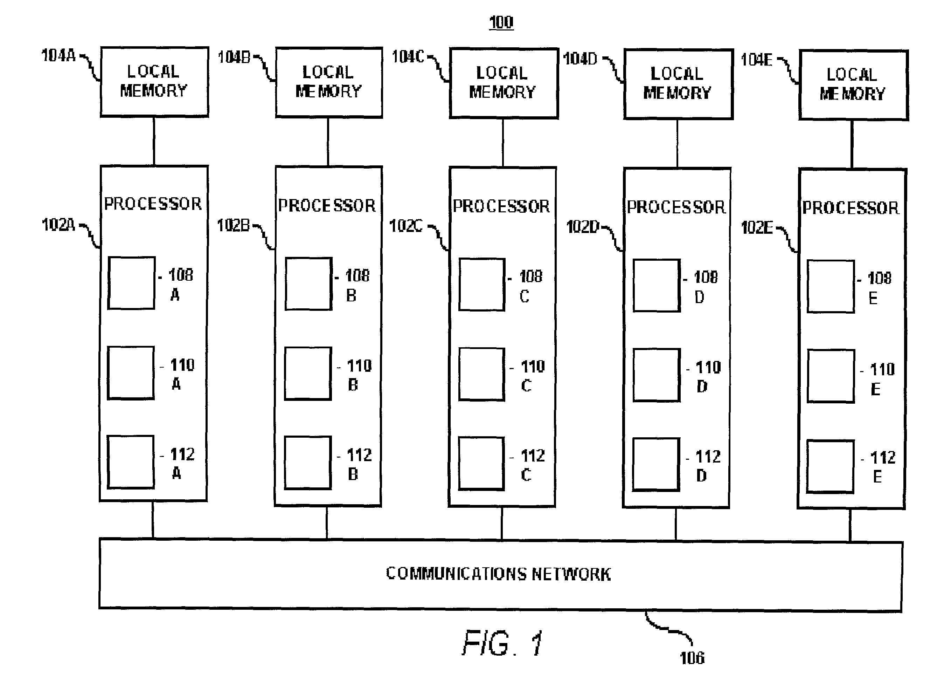

FIG. 1 is a block diagram of a distributed memory multiprocessing system 100. The multiprocessing system comprises a plurality of processors 102A, 102B, 102C, 102D, and 102E (hereinafter collectively referred to as processor 102), and an associated local memory 104A, 104B, 104C, 104D, and 104E (hereinafter collectively referred to as local memory 104). Each processor 102 is coupled to a communication network 106, which allows communication of data and commands between the processors 102(A-E). In one embodiment, the communication network 106 provides fast, robust communications. Each processor 102 may comprise separate software or hardware modules to perform the computations described herein. The communications network 106 is preferably an Ethernet, however, one of ordinary skill in the art can envision other types of networks that can be employed. These modules are referred to in association with each module's associated processor, and are collectively referred to as software modules 118, 110, and 112. For example, software modules 108A, 110A, and 112A are associated with processor 102A. The software modules can be the application software, message-passing middleware and the multicast software.

Generally, instructions and/or data for performing the operations described herein are all embodied in or retrievable from a computer-readable device, medium, or carrier, e.g., a data storage device, a data communications device, etc. Moreover, these instructions and/or data, when read, executed, and/or interpreted by the client computer processor 102, causes the processor 102 and distributed memory multi-processing system 100 to perform the steps necessary to implement and/or use the present invention.

Those skilled in the art will recognize that any combination of the above components, or any number of different components, including computer programs, peripherals, and other devices, may be used to implement the present invention, so long as similar functions are performed thereby.

The present invention can be implemented by a number of different interconnection topologies. For example, although it is generally advantageous for processors 102 to access their local memories 104 than to communicate with another processor, each processor 102 may access data in a centralized memory via the communication network, or may access data stored in the local memory 104 associated with another processor, if necessary. An example of a parallel processor suitable for use to implement the present invention is the INTEL PARAGON for instance.

The parallelism represented by the distributed-memory multiprocessor system 100 described above can be exploited in software using "message passing" techniques. The message passing model sets forth a set of processes that have only local memory 102, but are able to communicate with other processes by sending and receiving messages. A defining feature of the message-passing computer architecture model is that data transfers from the local memory of one processor to the local memory of another processor. A number of software libraries implementing the message passing paradigm are available. Among them the Message Passing Interface (MPI) has emerged as a standard, since it is robust, efficient and portable. MPI is also easy to use, because it provides bindings for FORTRAN 77 and C/C++. While the invention refers to MPI, one of ordinary skill in the art can appreciate that the scope of the invention is not intended to be limited to just MPI but all message passing middleware paradigms.

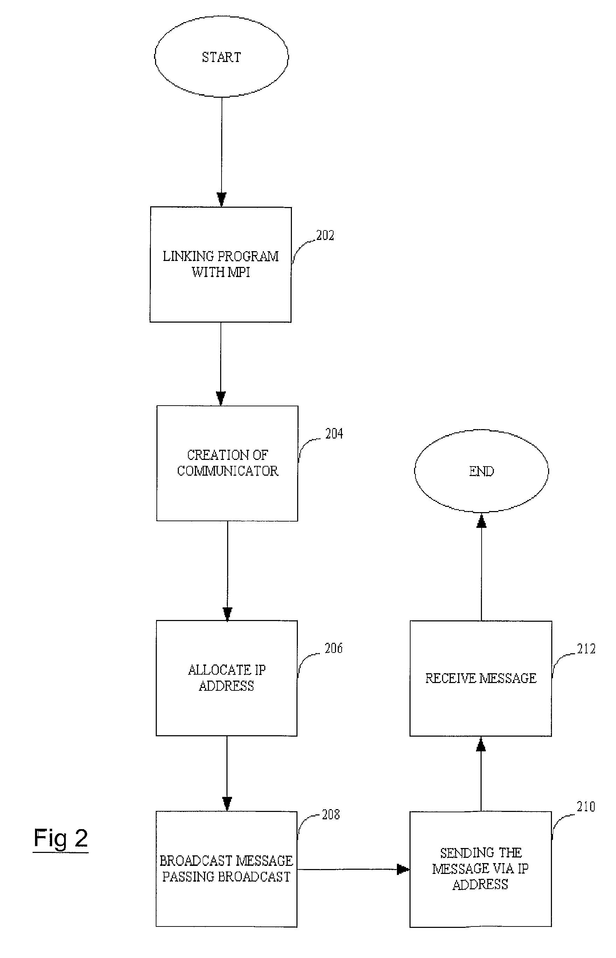

Figure 2 is a flowchart describing the method 200 of incorporating IP multicast with MPI, in accordance with an aspect of the present invention. An MPI implemented parallel computing model is implemented by writing a program (for example, in C, C++, or FORTRAN 77), compiling the program, and linking the compiled program to the MPI library, which encapsulates the details of the communications between the processors 104 in the multiprocessor system 100. To run the program thus compiled, P copies are made of the same program and each copy (representing a process) runs on each of the P processors 102 taking part in the computation, thus creating "P" parallel processes. Each process is assigned a unique identifier between 0 and P-1.

In step 202, the program is linked to the MPI library. Each process may follow a distinct execution path through the same code, and may communicate with other processes by calling appropriate routines in the MPI library. Thus defined, MPI supports a fully general single program, multiple data (SPMD) model.

Once the program is linked to the MPI library, communication is possible between the processors 102. Point-to-point communication is the fundamental communication facility provided by the MPI library. Point-to-point communications is conceptually simple: one processor 102 sends a message and another processor 102 receives it.

In step 204, a communicator is created. A communicator is a handle (or code) representing a group of processors that can communicate with one another. The communicator name is required as an argument to all point-to-point and collective operations. The communicator communicates with the processors that have indicated a desired to receive messages.
Table 1 illustrates a glossary of exemplary MPI communicator routines and their meaning.

**Table 1**

| | |
|---|---|
| MPI_COMM_RANK(COMM, RANK, IERR) | Processor rank |
| MPI_COMM_WORLD | Communicate with all processors |
| MPI_COMM_SIZE | The number of processors available |

In step 206, IP multicast system is used to allocate an IP address, after the communicator has been created. A unique IP multicast address is added to the created communicator. The middleware will remain the same but the code will be adjusted to support IP multicast transmission and reception in the TCP/IP protocol stack. For example, the MPI send command could be altered to allow the unique IP multicast address to indicate the predetermined destination of the message transmitted by the communicator. However, there are other ways in which the middleware can support the IP multicast protocol. However, one of ordinary skill can appreciate that the invention is not limited to the above-described technique. The code could allow the receiving processors access to a specific TCP/IP receiving socket from which the message will be broadcast. The receiving socket (not shown) is a port in the processor which allows the transmission and reception of messages. This feature allows MPI to transmit messages over TCP/IP. Therefore, when there is a send command (MPI_SEND), the library calls the multicast layer which provide a unique IP address, upon which the message with be transmitted.

IP multicast uses Class D Internet protocol addresses. The addresses have 1110 as their high-order four bits to specify multicast host groups. In Internet standard "dotted decimal" notation, the host-groups addresses range from 224.0.0.0 to 239.255.255.255. Typically, the allocated IP address would be in this form.

Usually, the message that is to be transmitted consists of 2 parts: the envelope and the message body. It is the envelope that will most likely be adjusted to support IP multicast technology. However, one of ordinary skill can appreciate that the invention is not limited to the above-described technique. Normally, the envelope of an MPI message has 4 parts: source, destination, communicator and tag. The source is the sending process. The destination is the receiving process. The communicator specifies a group of processes to which both source and destination belong and the tag is used to classify messages.

Upon initialization of the MPI program, the method 200 allocates IP addresses to the predetermined communicators. For example, it could allocate 224.1.2.3 for the first communicator and 224.1.2.4 for the next, and etc. Accordingly, when the first communicator is created, then MPI will assign it the corresponding IP address. Typically, the MPI program will map approximately 30 addresses which correspond to 28 communicators.

Once the IP address had been initialized and associated with a communicator, the MPI generates a message passing broadcast, as shown in step 208. A message-passing broadcast will be transmitted. A message-passing broadcast is a transmission that indicates that a message from a particular processor 204 will be transmitted. This is a common function of all message passing middleware including MPI.

In step 210, the message is sent. Typically, for message-passing paradigms sending messages is relatively straightforward. The source (the identity of the sender) is determined implicitly, but the rest of the message (envelope and body) is given explicitly by the sending process. The two functions, MPI_SEND and MPI_RECV are the basic point-to-point communication routines in MPI. MPI_SEND takes the following arguments: buffer, count, data-type, destination, tag, and communicator. Buffer, counter and data-type are part of the message body and destination, tag and communicator are the message envelope. The message body contains the data to be sent: count items of type data-type. The message envelope tells where to send the message body. In this embodiment, the destination argument is MPI communicator, which allows the message to be routed to the recipients.

In step 212, the message is received at its destination. Typically, to receive a message, the intended processor specifies a message envelope, which MPI compares to the envelopes of pending messages. If there is a match, a message is received. Otherwise, the receive operation cannot be completed until a matching message is sent. Multicast is a receiver-based concept. Receivers join a particular multicast session group and traffic is delivered to all members of that group by the network infrastructure. Accordingly, in the creation of the communicator as described above with regards to step 204, the receiver processors "join" a particular multicast session group, which enables them to receive messages transmitted by the transmitting processor. At the receiver, the processor "tunes" to the specific port determined by the IP address and indicates that it is looking for a specific address.

However, there is a reliability issue relating to the use of IP multicast. Typically, the reception of a message sent via IP multicast cannot be ensured. For example, on the standard Ethernet network, packets may be lost or duplicated. It's a design limitation regarding the Ethernet network and MPI usually sends messages using TCP instead of UDP or just bare because the reception of the message can be verified via an acknowledgement.

In the preferred embodiment of the invention, using a switched network may increase reliability. A switched network intelligently routes the packet to the appropriate destination. So, for example, if there are four processors on the switch, and if the first processor wants to send a message to processor three, processors two and four will not see the packets going through the network frame. In such an environment, the probability of losing a packet becomes very low. A switched network as such is well known in the art.

Additional reliability can be obtained by adding a stamp to each message. Each recipient will receive the message several times through the IP multicast. Each recipient will receive the message several times and use the stamp to discriminate whether the message is a new message or one of the duplicate copies. A stamp can be a predetermined value input in the envelope or the message body.

What has been described and illustrated herein is a preferred embodiment of the invention along with some of its variations. The terms, descriptions and figures used herein are set forth by way of illustration only and are not meant as limitations. Those skilled in the art will recognize that many variations are possible within the spirit and scope of the invention, which is intended to be defined by the following claims -- and their equivalents -- in which all terms are meant in their broadest reasonable sense unless otherwise indicated.

## Claims

1. A method for transmitting messages between a plurality of processors, the method comprising the steps of:
creating a communicator (204) in message-passing-middleware which is used to transmit a message from a predetermined processor to at least one other processor, such that the message includes a envelope and message body; and
allocating a predetermined multicast address (206) to the communicator (204), such that the message includes the multicast address.

2. The method of claim 1, further comprising the step of:
linking the message-passing-middleware software to a predetermined application software (202) in at least one processor.

3. The method of claim 2, where the predetermined application is written using the C or Fortran programming languages.

4. The method of claim 1, further comprising the step of:
transmitting a message passing broadcast (208) from the processor generating the communicator to a plurality of processors.

5. The method of claim 1, further comprising the step of:
sending the message to the predetermined processors via a TCP/IP network (210).

6. The method of claim 1, further comprising the step of:
receiving the message via the TCP/IP network (212).

7. The method of claim 1, wherein the predetermined multicast address values range from 224.0.0.0 to 239.255.255.255.

8. The method of claim 1, wherein the message-passing-middleware is message passing interface (MPI).

9. The method of claim 1, wherein the multicast address is determined by an IP multicast system.

10. An apparatus for transmitting messages between a plurality of processors, the apparatus comprises:
a plurality of processors (102);
a network connecting the plurality of processors (106); and
message-passing software running on each of the plurality of processors;
wherein a transmitting processors (102) generate a communicator which is used transmit messages between the plurality of processors (102), such that the communicator is assigned a multicast address.
